# EUROPEAN PATENT APPLICATION

(11) **EP 2 433 785 A1**
(43) Date of publication of application: **28.03.2012**
(21) Application number: 11180675.8
(22) Date of filing: 09.09.2011
(51) Int. Cl.: B29C 70/38, B29B 15/12

(54) **Resin delivery, application and infusion system and integrated layup system and method of use**

(30) Priority: 24.09.2010 US 889785
(71) Applicant: GENERAL ELECTRIC COMPANY, Schenectady, NY 12345 (US)
(72) Inventor: Koeniger, Rainer, Niskayuna, NY New York 12309 (US); Vermilyea, Mark Ernest, Niskayuna, NY New York 12309 (US); Quek, Shu Ching, Niskayuna, NY New York 12309 (US); Nieuwenhove, Stefan Guido, Niskayuna, NY New York 12309 (US); Kourkoutsaki, Theodosia, Niskayuna, NY New York 12309 (US); O'Flynn, Julian Thomas, Niskayuna, NY New York 12309 (US); Kluge, Thomas, Niskayuna, NY New York 12309 (US); Schell, Julia Susanne Ursula, Niskayuna, NY New York 12309 (US); Parodi, Bruno Betoni, Niskayuna, NY New York 12309 (US); Ostojic, Mile, Niskayuna, NY New York 12309 (US); Koerwien, Thomas, 85635 Hoehenkirchen-Siegertsbrunn (DE)
(74) Representative: Bedford, Grant Richard

(57) **Abstract**

An automated in-line feed-through system 100 integrating the delivery, application and infusion of a resin to one or more fiber tows 120 and layup of the one or more infused fiber tows to form a composite structure. The system includes an automated resin delivery, deposition and infusion system 110 configured to deposit the resin on a respective one of the one or more fiber tows and form the infused fiber tows. The system integrates an automated layup system 112 including a compaction roller 136 configured to adhere the one or more infused fiber tows to a substrate. The system further includes a controller 132 configured to control a flow rate of the resin, control the temperature of the resin, the infused fiber tows and the automated layup system 100, and control tension of the one or more infused fiber tows 120 within the automated layup system. Other aspects of the automated in-line system are also provided.

## Description

The invention relates generally to systems for applying, and infusing resins for composite materials and subsequent layup of the infused materials, and more particularly, to automated systems for controllably delivering, applying and infusing resins onto one or more fiber tows and subsequent layup of the infused fiber tows.

Resin infused fiber composite materials are being used increasingly in a variety of diverse industries, such as automotive, aircraft, and wind-energy, in part, because of their low weight and high strength properties. It would be desirable to form complex composite components and/or fiber patterns wherein the infusion process and layup process are integrated into an automated in-line feed-through system. Current manufacturing processes typically involve the use of fiber pre-forms with subsequent resin infusion, or preimpregnated fiber sheets called "prepregs" and a separate layup system and procedure using these infused fiber pre-forms or preimpregnated fiber tows.

Currently, efforts are underway to provide infusion of one or more individual fiber tows using systems including rollers with resin flowing through holes in the rollers from the bore to the outside surface. However, these systems do not permit control of the infusion of individual tows. To provide for control of infusion of individual tows, efforts are also underway to provide infusion of an array of fiber tows using systems including resin flowing through individually controllable nozzles. Irrespective of infusion procedure, subsequent to the infusion process, the one or more fiber tows are subject to layup on a separate component layup tool or tools. This process is time consuming and expensive in that separate system are utilized to complete the fabrication of composite parts.

It would therefore be desirable to provide an improved system that permits control of the resin infusion of one or more fiber tows in an automated in-line feed-through system that integrates a layup system and procedure to complete fabrication of a composite part. In addition, it would be desirable for the system to facilitate real time in-line infusion for one or more dry fiber tows and layup of the infused fiber tows for formation of complex composite components in a single manufacturing step.

Briefly, one aspect of the present invention resides in an automated in-line manufacturing system for applying a resin to one or more fiber tows, infusing the one or more fiber tows with the resin to form one or more infused fiber tows and subsequent layup of the one or more infused fiber tows to form a composite part, wherein each of the one or more fiber tows is moving at a respective fiber speed. The automated in-line manufacturing system includes an automated resin delivery, deposition and infusion system, an automated layup system and a controller. The automated resin delivery, deposition and infusion system is configured to deliver and deposit the resin on a respective one of the one or more fiber tows and infuse the resin into the one or more fiber tows to form the one or more infused fiber tows. The automated layup system is configured in-line with the automated resin delivery, deposition and infusion system to receive a feed-through of the one or more infused fiber tows. The automated layup system comprising at least one compaction roller configured to adhere the one or more infused fiber tows to a surface of a substrate and a positioning system to orient the compaction roller relative to the surface of the substrate. The controller is configured to control a flow rate of the resin relative to the fiber speed of the respective one of the one or more fiber tows, control a temperature of the resin, the infused fiber tows and the automated layup system, and control tension of the one or more infused fiber tows within the automated layup system.

Another aspect of the invention resides in an automated in-line manufacturing system for applying a resin to one or more fiber tows, infusing the one or more fiber tows with the resin to form one or more infused fiber tows and subsequent layup of the one or more infused fiber tows to form a composite part, wherein each of the one or more fiber tows is moving at a respective fiber speed. The automated in-line manufacturing system includes an automated resin delivery, deposition and infusion system, an automated layup system and controller. The automated resin delivery, deposition and infusion system is configured to deliver and deposit the resin on a respective one of the one or more fiber tows and infuse the resin into the one or more fiber tows to form the one or more infused fiber tows. The automated layup system is configured in-line with the automated resin delivery, deposition and infusion system to receive the one or more infused fiber tows. The automated layup system comprising a plurality of pinching rollers in a feed path of the one or more infused fiber tows, at least one compaction roller configured to adhere the one or more infused fiber tows to a surface of a substrate and a positioning system to orient the compaction roller relative to the surface of the substrate. The controller is configured to control a flow rate of the resin relative to the fiber speed of the respective one of the one or more fiber tows through the automated resin delivery, deposition and infusion system using feedback based on measurement data of at least one of a resin width and a resin thickness for respective ones of the one or more infused fiber tows, control a temperature of the resin, the infused fiber tows and the automated layup system, and control tension of the one or more infused fiber tows within the automated layup system.

Various features, aspects, and advantages of the present invention will become better understood when the following detailed description is read with reference to the accompanying drawings in which like characters represent like parts throughout the drawings, wherein:
FIG. 1 schematically depicts in side view, an automated in-line system for resin delivery, application and infusion to form infused fiber tows and subsequent fiber layup to form a composite part according to an embodiment;
FIG. 2 schematically depicts in side view, an automated in-line system for resin delivery, application and infusion to form infused fiber tows and subsequent fiber layup to form a composite part according to an embodiment;
FIG. 3 schematically depicts in side view, an automated in-line system for resin delivery, application and infusion to form infused fiber tows and subsequent fiber layup to form a composite part according to an embodiment;
FIG. 4 schematically depicts in side view, an automated in-line system for resin delivery, application and infusion to form infused fiber tows and subsequent fiber layup to form a composite part according to an embodiment; and
FIG. 5 schematically depicts in top view, an example array of fiber tows for the fiber placement system shown in FIG. 4.

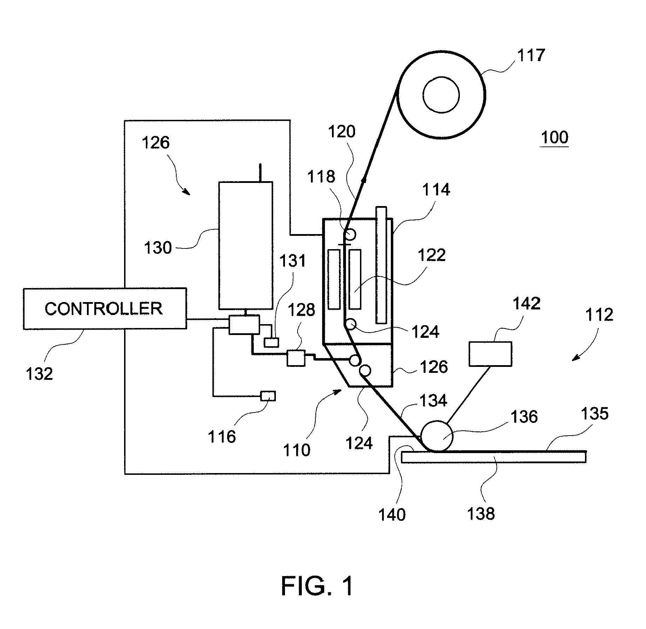

An automated resin delivery, deposition and infusion system 110 for delivering and applying a resin to one or more fiber tows 120, infusing the fiber tows with a resin to form one or more infused fiber tows 134 and an automated in-line layup system 112 for subsequent layup of the infused fiber tows 134 is described generally with reference to FIG. 1. The automated resin delivery, application and infusion system 110 is integrated into the automated in-line layup, or fiber placement, system 112 to form a composite automated in-line manufacturing system 100, an example arrangement of which is shown in FIG. 1. This arrangement enables real-time, inline infusion of the one or more dry fiber tows 120, with control of the resin application (and consequently infusion) rate for each of the tows 120, and subsequent layup of the resin infused tows 134 to form a composite part, based on part specific requirements. The resulting system 100 can be used to fabricate composite parts or structures, non-limiting examples of which include low weight, high strength aircraft and automotive components.

For the example arrangement shown in FIG. 1, the automated resin delivery, deposition and infusion system 110 includes fiber dispensing means 114 for feeding one or more dry fiber tows 120, where each of the fiber tows 120 is moving at a respective fiber speed. More particularly, the fiber dispensing means 114 may be configured to separately feed each of the one or more fiber tows 120, such that the tows 120 can be fed at different rates or at the same rate, depending upon design parameters. In one non-limiting example, the dispensing means 114 may be in communication with one or more spools 117 onto which each of the tows in the one or more tows 120 is initially wound on a respective one of the spools. For the example arrangement of FIG. 1, during system operation, each of the one or more fiber tows 120 passes by a first roller element 118 to aid in alignment of the one or more fiber tows 120. For ease of illustration, only one roller element 118 is shown in FIG. 1. Each of the one or more fiber tows 120 next passes through a respective eyelet, or alignment plates, 122. For ease of illustration, only one eyelet 122 is shown in FIG. 1. However, typically one eyelet 122 may be provided for each of the fiber tows 120 in the one or more fiber tows. The one or more fiber tows 120 may then move through a width-controlling roller 124. Such control is helpful to ensure proper infusion of the entire tow across its width, as well as proper tow size for tow handling in the automated layup system 112.

The one or more fiber tows 120 move from the width-controlling roller 124 to a resin delivery, deposition and infusion portion 126 of the automated resin delivery, deposition and infusion system 110. As indicated in FIG. 1, the automated resin delivery, deposition and infusion system 110 includes the resin delivery, deposition and infusion portion 126 comprising a means for delivery, depositing and infusing a resin 130 onto the one or more fiber tows 120. In the illustrated embodiment, the resin delivery, depositing and infusion portion 126 is formed as separate components, but it should be understood that a single component delivery, deposition and infusion portion 126 is anticipated by this disclosure.

With regard to the resin 130 and one or more fiber tows 120, the invention is not limited to specific resins or fiber types. However, in one non-limiting example, the resin 130 is a thermoset resin useful in composite fibers. Examples of suitable thermoset resins that may be utilized include, but are not limited to epoxies, polyesters, vinylesters, phenolic resins, polyurethanes, polyamides, or combinations of two or more of these. In addition, any suitable reinforcing material may be infused using the apparatus, systems and methods described herein. For example, relatively continuous fibers, or tows, may be arranged to form a unidirectional array of fibers, a cross-plied array of fibers, or bundled in tows that are arranged to form a unidirectional array of tows, or that are woven or cross-plied to form a two-dimensional array, or that are woven or braided to form a three-dimensional fabric. For three-dimensional fabrics, sets of unidirectional tows may, for example, be interwoven transverse to each other.

Useful fibers to be included in such reinforcing materials, such as tapes, or fabrics, include without limitation, glass fibers, carbon and graphite fibers, basalt fibers, polymeric fibers, including aramide and boron filaments, silica fibers, copper fibers and the like. The fibers may be non-conductive or conductive, depending upon the desired application of the composite fiber. In this particular non-limiting example, the resin 130 is an epoxy resin, and the one or more fiber tows 120 comprise carbon fibers. However, the invention is not limited to these specific resins or fiber types.

In a non-limiting example, delivery, depositing and infusion portion 126 includes one or more nozzles 128 configured to deposit the resin 130 on a respective one of the one or more fiber tows 120. In a preferred embodiment, one nozzle 128 is provided for each of the one or more fiber tows 120. The invention is not limited to any specific arrangement of nozzles. Additional aspects of an application and infusion system incorporating the use of nozzles is further described in copending application, entitled, "Resin Application and Infusion System", bearing attorney docket number 236021-1 and U.S. Patent Application bearing serial no. 12/575,668, filed by the same assignee, and incorporated herein by this reference.

The resin infusion apparatus described can be provided as a portion of the delivery, deposition and infusion portion 126, and used to infuse any desired resin into any desired reinforcing material. Such a system will desirably comprise a source of the desired resin 130, and one or more computer controlled pumps 131, wherein each of the pumps is configured to supply the resin 130 to ones or more of the nozzles 128, and wherein each of the pumps 131 is controlled by a controller (described presently).

As indicated in FIG. 1, the composite automated in-line manufacturing system 100 further includes a controller 132 configured to control the delivery, deposition and infusion portion 126, and more particularly a flow rate of the resin 130 through the fiber dispensing means 114 and the automated in-line layup system 112 to provide the desired resin content based on the fiber speed of the respective ones of the fiber tows 120. The controller 132 may exchange information with the automated in-line layup system 112 as indicated in FIG. 1, to optimize the infusion for any laydown sequence. The controller 132 may be configured to control a flow rate of the resin 130 relative to the fiber speed of the respective one of the one or more fiber tows 120, provide temperature control of the resin 130, the infused fiber tows 134 and the automated in-line layup system 112, and control tension of the one or more infused fiber tows 134 within the automated in-line layup system 112. While separate controllers may be employed for the composite automated in-line manufacturing system 100, and more particularly for the automated resin delivery, deposition and infusion system 110 and for the automated in-line layup system 112, this control integration is required. In some embodiments, the controller 132 may comprise one or more processors. It should be noted that the present invention is not limited to any particular processor for performing the processing tasks of various embodiments of the invention. The term "processor," as that term is used herein, is intended to denote any machine capable of performing the calculations, or computations, necessary to perform the tasks of the invention, and to control the mechanical and electrical devices in the invention. The term "processor" is intended to denote any machine that is capable of accepting a structured input and/or of processing the input in accordance with prescribed rules to produce an output, as will be understood by those skilled in the art.

For certain embodiments, the controller 132 is further configured to control the flow rate of the resin 130 through each of the nozzles 128 using feedback based on measurement data of resin width and/or resin thickness for respective ones of the fiber tows 120. For the example configuration depicted in FIG.1, the automated resin delivery, deposition and infusion system 110 further includes one or more sensors 116 for monitoring at least one of the resin width and the resin thickness. Although only one sensor 116 is indicated in FIG. 1 for ease of illustration, multiple sensors 116 may be employed, and in one non-limiting example, one sensor 116 is provided for each of the fiber tows 120. Example sensors include optical or contact sensors.

The automated in-line layup system 112 is disposed in feed-through positioning with the automated resin delivery, deposition and infusion system 110. More specifically, the automated in-line layup system 112 is aligned to receive a feed through of the one or more fiber tows 120 after infusion of the resin 130, and more particularly to receive one or more infused fiber tows 134. The automated in-line layup system 112 is generally comprised of at least one compaction roller 136 configured to deliver a force to adhere the one or more infused fiber tows 134 to a surface 140 of a substrate 138, such as a mold or tool. During setup, the consistency of the resin 130 chosen may be such that the resin 130 will be tacky enough to adhere to the substrate 138 rather than the compaction roller 136. In other non-limiting examples the temperature of the resin infused tow 134 may require the inclusion of a heating or cooling means (described presently) to meet the temperature requirement. The automated in-line layup system 112 may further include a positioning system 142 to orient the compaction roller 136 relative to the surface 140 of the substrate 138. In one non-limiting example, the in-line layup system 112 may be mounted on a robotic head in front of the substrate 138, or mold, such that the one or more resin infused fiber tows 134 will adhere to the substrate 138 and pull the fiber feed through the automated resin delivery, deposition and infusion system 110 when the automated in-line layup system 112 moves with respect to the substrate 138.

The specific configuration of the composite automated in-line manufacturing system 100 may vary based on the application. FIG. 1 illustrates a single fiber tow 120 wherein resin 130 is deposited via a single nozzle 128 as previously described to form an infused fiber tape 135.

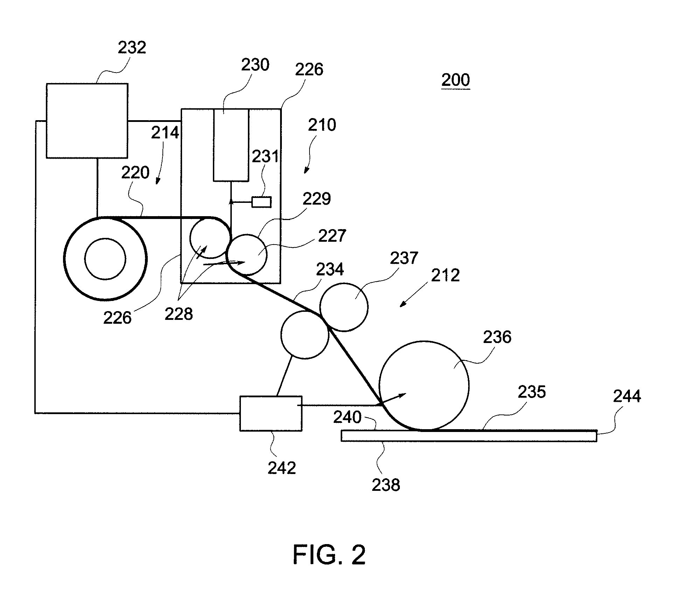

Turning now to FIG. 2, illustrated is another exemplary embodiment of an automated resin delivery, deposition and infusion system 210 for applying a resin to one or more dry fiber tows 220, infusing the dry fiber tows with a resin to form one or more infused fiber tows 234 and an automated in-line layup system 212 for subsequent layup of the infused fiber tows 234 and fabrication of a composite part.

As illustrated in FIG. 2, the automated resin delivery, application and infusion system 210 is integrated into the automated in-line layup, or fiber placement, system 212 to form a composite automated in-line manufacturing system 200, an example arrangement of which is shown in FIG. 2. This arrangement enables real-time, inline infusion of one or more dry fiber tows 220, with control of the resin application and infusion rate for each of the tows 220, and subsequent layup of the resin infused tows 234 to form a composite part, based on part specific requirements.

For the example arrangement shown in FIG. 2, the automated resin delivery, deposition and infusion system 210 includes a fiber dispensing means 214 for feeding the one or more dry fiber tows 220, where each of the fiber tows is moving at a respective fiber speed. Similar to the embodiment of FIG. 1, the fiber dispensing means 214 is configured to feed a single fiber tow 220, or separately feed each of the one or more fiber tows 220, such that the tows 220 can be fed at different rates or at the same rate, depending upon design parameters. During system operation, each of the one or more tows 220 is fed to an application and infusion portion 226 of the automated resin delivery, deposition and infusion system 210 for delivery, depositing and infusing of a resin 230 onto the one or more fiber tows 220. In the illustrated embodiment, the resin delivery, depositing and infusion portion 226 is formed as integrated component, but it should be understood that a multiple component delivery, deposition and infusion portion 226 is anticipated by this disclosure. In one non-limiting example, the resin delivery, deposition and infusion portion 226 may comprise one or more infusion rollers 228 each having an interior arcuate surface 227 and an exterior arcuate surface 229. The one or more infusion rollers 228 are configured in fluidic communication with the resin 230.

A plurality of pores (not shown) are provided in connection with the one or more infusion rollers 228 and perforate the arcuate surfaces thereof, i.e., the plurality of pores connect the interior arcuate surface 227 to the exterior arcuate surface 229. The one or more infusion rollers 228 may be provided with a plurality of pores that extend substantially across the entirety of the length of each of the one or more infusion rollers 228, or any lesser length, or that are spaced in an irregular fashion or pattern wherein the pores are not equidistant from one another. Additional aspects of an application and infusion system incorporating the use of one or more infusion rollers and perforates is further described in copending application, entitled, "Resin Infusion Apparatus and System, Layup System, and Methods of Using These", bearing attorney docket number 241776-1 and U.S. Patent application bearing serial no. 12/648,404, and incorporated herein by this reference.

The resin infusion apparatus described can be provided as a portion of the delivery, deposition and infusion portion 226, and used to infuse any desired resin into any desired reinforcing material. Such a system will desirably comprise a source of the desired resin 230, and a pump 231 capable of applying the desired pressure to the resin 230 to force it through the infusion rollers 228 and out the pores thereof, relatively uniformly, to infuse the desired reinforcing material.

Similarly to the embodiment described in FIG. 1, the composite automated in-line manufacturing system 200 further includes a controller 232 configured to control the delivery, deposition and infusion portion 226, and more particularly a flow rate of the resin 230 through each of the dispensing means 214, and the automated in-line layup system 212 to provide the desired resin content based on the fiber speed of the respective ones of the fiber tows 220. The controller 232 operates in generally the same manner as controller 132 of FIG. 1, and thus for simplicity will not be described again with reference to FIG. 2.

The automated in-line layup system 212 is disposed in feed-through positioning with the automated resin delivery, deposition and infusion system 210. More specifically, the automated in-line layup system 212 is aligned to receive the one or more infused fiber tows 234. In a non-limiting embodiment, the automated in-line layup system 212 is generally comprised of at least one compaction roller 236 and at least one set of pinching rollers 238 configured to adhere the one or more infused fiber tows 234 to a surface 240 of a substrate 238 to form a composite part 244. The compaction roller 236 is disposed in-line with the one or more infused fiber tow 134 feed through and provides a force for compacting the one or more infused fiber tows 234 onto the surface 240 of the substrate 238. The plurality of pinching rollers 237 are disposed in-line with the feed-through, and more particularly disposed between the automated delivery, deposition and infusion system 210 and the compaction roller 236. The plurality of pinching rollers 237 provide a number of different functions including, but not limited to the following: (i) improving the degree of infusion of resin 230 if the one or more fiber tows 220 have not been entirely infused by the delivery, deposition and infusion portion 226; (ii) shaping the one or more infused fiber tows 234 (or tape) to yield a more rectangular cross section; and (iii) reducing the tension on the feed through of the one or more infused fiber tows 234 just prior to layup by the compaction roller 236. The automated in-line layup system 212 may further include a positioning and control system 242 to orient the compaction roller 236 relative to the surface 240 of the substrate 238. In addition, the positioning and control system 242 may provide control of parameters, such as spacing, or the like of the plurality of pinching rollers 237 and thereby provide control of the feed-through tension.

The specific configuration of the composite automated in-line manufacturing system 200 may vary based on the application. FIG. 2 illustrates a single fiber tow 220 wherein resin 230 is deposited via an infusion roller 228 as previously described to form an infused fiber tape 235.

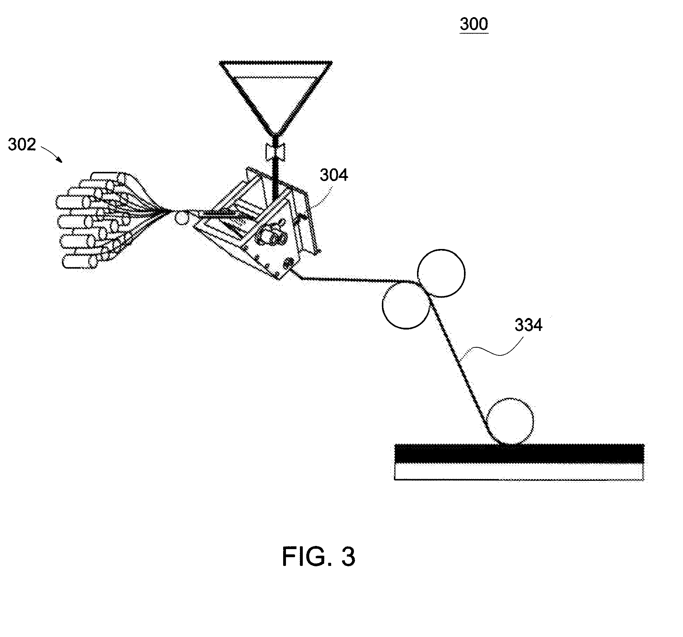

Illustrated in FIG. 3 is a composite automated in-line manufacturing system 300, generally similar to previously described system 200 of FIG. 2, except in this specific embodiment, a plurality of fiber tows 320 are provided to an automated resin delivery, deposition and infusion system 310, generally similar to the automated resin delivery, deposition and infusion system 210 of FIG. 2, resulting in a plurality of infused fibers 334.

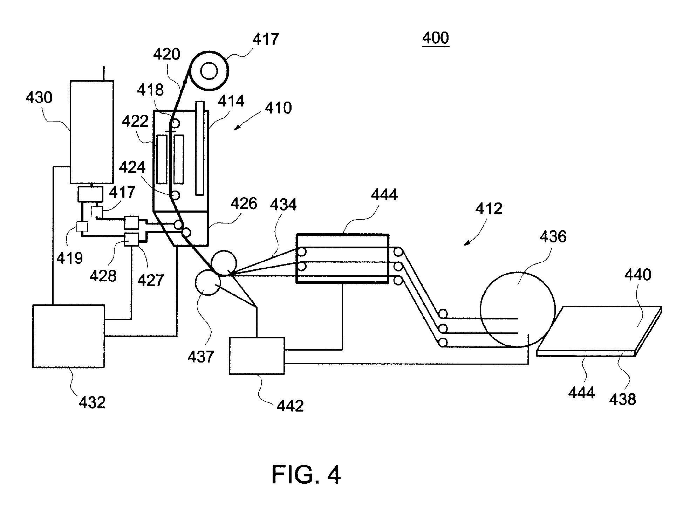

Referring now to FIG. 4, illustrated is a composite automated in-line manufacturing system 400, generally similar to the previously described system 100 of FIG. 1, except in this particular embodiment, a plurality of fiber tows 420 are provided to an automated resin delivery, deposition and infusion system 410, resulting in a plurality of infused fibers 434. More specifically, illustrated is an automated resin delivery, deposition and infusion system 410 for applying a resin to a plurality of fiber tows 420, infusing the plurality of fiber tows 420 with a resin 430 to form a plurality of infused fiber tows 434 and an automated in-line layup system 412 for subsequent layup of the infused fiber tows 434. The composite automated in-line manufacturing system 400 enables real-time, inline infusion of a plurality of dry fiber tows 420, with control of the resin application and infusion rate for each of the plurality of tows 420, and subsequent layup of the resin infused tows 434 to form a composite part, based on part specific requirements.

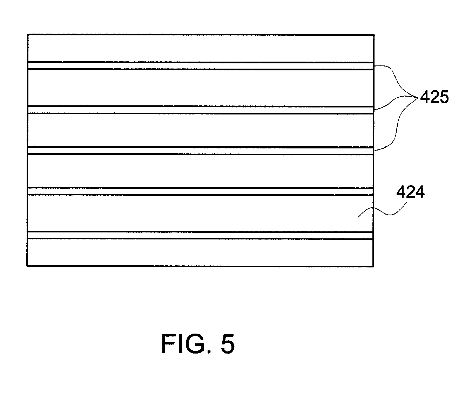

Similar to the embodiment described with respect to FIG. 1, the automated resin delivery, deposition and infusion system 410 includes fiber dispensing means 414 for feeding one or more dry fiber tows 420, where each of the fiber tows is moving at a respective fiber speed. In contrast to the embodiment described in FIG. 1, in this particular embodiment, the fiber dispensing means 414 is configured to separately feed a plurality of fiber tows 420, such that each of the plurality of tows 420 can be fed at different rates or at the same rate, depending upon design parameters. For example, the fiber speed may be zero in some instances for one or more of the fiber tows, while others of the tows are moving. In a non-limiting example, the dispensing means 414 may be in communication with one or more spools 417, a first roller element 418, an eyelet 422, and a width-controlling roller 424, similar to those described in the embodiment illustrated in FIG. 1. In this particular embodiment, the width-controlling roller 424 may include one or more notches 425 (as best illustrated in FIG. 5) for receiving and guiding respective ones of the plurality of fiber tows 420, which are shaped to provide control over the tow width exiting the roller 424. Such control is helpful to ensure proper infusion of the entire tow across its width, as well as proper tow size for the tow handling apparatus in the automated layup system 412.

The one or more fiber tows 420 move from the width-controlling roller 424 to the application and infusion portion of the automated resin delivery, deposition and infusion system 410. As indicated in FIG. 4, the automated resin delivery, deposition and infusion system 410 includes a resin delivery, deposition and infusion portion 426 comprising a means for delivering, depositing and infusing a resin 427 onto each of the plurality of fiber tows 420. In one non-limiting example, a plurality of nozzles 428, generally similar to nozzles 128 described with respect to FIG. 1, are configured to deposit a resin 430 on a respective one of the plurality of fiber tows 420. In a preferred embodiment, one nozzle 428 is provided for each of the plurality of fiber tows 420.

As indicated in FIG. 4, the composite automated in-line manufacturing system 400 further includes a controller 432 configured to control the delivery, deposition and infusion portion 426, and more particularly a flow rate of the resin 430 through each of the means for delivery, depositing and infusing a resin 427, and the automated in-line layup system 412 to provide the desired resin content based on the fiber speed of the respective ones of the plurality of fiber tows 20. The controller 432 is configured as previously indicated in FIG. 1, to optimize the infusion and the laydown sequence.

For the example configuration depicted in FIG. 4, the automated resin delivery, deposition and infusion system 410 further comprises one or more computer-controlled pumps 419. For the illustrated embodiment, each of the pumps 419 is configured to supply the resin 430 to respective ones of the plurality of nozzles 428. More particularly, a separate pump 419 is provided for each of the nozzles 428, for the illustrated example. As indicated, each of the pumps 419 is controlled by the controller 432. In other configurations, at least one of the pumps 419 may be equipped with multiple valves (not shown) to control flow of the resin 430 from the pump 419 to multiple nozzles 428. For example, each of the pumps 419 may be used to deliver resin to multiple nozzles 428. In one non-limiting example, the pumps 419 are positive displacement pumps. In particular examples, positive displacement pumps with little leakage are employed. The pump(s) 419 may be connected to the nozzles 428 by tubing or pipes (not shown).

For particular embodiments, the controller 432 is further configured to receive fiber feed rate signals for the respective ones of the plurality of fiber tows 430 and to control the pumps 419 based at least in part on the fiber feed rate signals for the respective ones of the plurality of fiber tows 420. For certain embodiments, the fiber tows 420 have different fiber feed rates, such that the controller 432 applies different control signals to the respective pumps 419. The fiber speed may be zero in some instances for one or more of the fiber tows 420. In one non-limiting example, the fiber feed rate signals are read from a metering roller (not shown). The metering roller could be located along the tow path.

The automated in-line layup system 412 is disposed in feed-through positioning with the automated resin delivery, deposition and infusion system 410. More specifically, the automated in-line layup system 412 is aligned to receive the feed-through of the plurality of infused fiber tows 434. The automated in-line layup system 412 is generally comprised of at least one compaction roller 436 and at least one set of pinching rollers 437 configured to adhere the one or more infused fiber tows 434 to a surface 440 of a substrate 438. Similar to the previously described embodiments, the compaction roller 436 is disposed in-line with the feed-through and provides a force for compacting the infused fiber tows 434 to substrate 438. The plurality of pinching rollers 437 are disposed in-line between the automated delivery, deposition and infusion system 410 and the compaction roller 436. The plurality of pinching rollers 437, as previously described, provide further infusion of resin 430 if the one or more fiber tows 420 have not been entirely infused during the infusion step, shaping of the one or more infused fiber tows 434 (or tape) to yield a more rectangular cross section and reduction in the tension on the feed through of the one or more infused fiber tows 434 just prior to layup by the compaction roller 436.

The automated in-line layup system 412 may further include a cooling module 444 and a positioning and control system 442 to orient the compaction roller 436 relative to the surface 440 of the substrate 438. In addition, the positioning and control system 442 may provide control of parameters, such as spacing, or the like of the plurality of pinching rollers 437. After passing through the pinching rollers 437, the resin infused fiber tows 434 are fed through the cooling module 444, in the automated in-line layup system 412 illustrated in FIG. 4. Non-limiting examples of the cooling module 444 include an air cooler and coolers sold under the tradename Vortex Coolers by ITW Air Management, having a place of business in Cincinnati, Ohio. For certain embodiments, the cooling module 444 cools the resin infused tows 434 to a temperature in a rage of about 40° F to about 70° F. For the configuration shown in FIG. 4, the cooled, resin-infused fiber tows 434 are then compacted onto the surface 440 of the substrate 438 by the compaction roller 436 to form a composite part 444.

Illustrated in FIG. 4 is a composite automated in-line manufacturing system 400, generally similar to previously described system 100 of FIG. 1, except in this specific embodiment, a plurality of fiber tows 402 are provided to an automated resin delivery, deposition and infusion system 410, generally similar to the automated resin delivery, deposition and infusion system 110 of FIG. 1, resulting in a plurality of infused fibers 434. The specific configuration of the composite automated in-line manufacturing system 400 may vary based on the application.

Beneficially, by integrating an automated resin delivery, application and infusion system 110, 210, 310, 410 in-line and integrated with an automated layup system 112, 212, 312, 412, advanced composite structures can be fabricated, despite having complex shapes requiring separate manufacturing processes and steps to achieve delivery, application and infusion of fiber tows and subsequent layup of the infused fiber tows. The resulting composite automated in-line manufacturing system integrates the in-line resin delivery, application and infusion system and automated layup system of the present invention thus providing fabrication of these complex composite structures with improved control and at lower cost than conventional fiber placement systems.

Although only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. An automated in-line manufacturing system for applying a resin to one or more fiber tows, infusing the one or more fiber tows with the resin to form one or more infused fiber tows and subsequent layup of the one or more infused fiber tows to form a composite part, wherein each of the one or more fiber tows is moving at a respective fiber speed, the automated system comprising:
   an automated resin delivery, deposition and infusion system configured to deliver and deposit the resin on a respective one of the one or more fiber tows and infuse the resin into the one or more fiber tows to form the one or more infused fiber tows;
   an automated layup system configured in-line with the automated resin delivery, deposition and infusion system to receive a feed-through of the one or more infused fiber tows, the automated layup system comprising at least one compaction roller configured to adhere the one or more infused fiber tows to a surface of a substrate and a positioning system to orient the compaction roller relative to the surface of the substrate; and
   a controller configured to control a flow rate of the resin relative to the fiber speed of the respective one of the one or more fiber tows, control a temperature of the resin, the infused fiber tows and the automated layup system, and control tension of the one or more infused fiber tows within the automated layup system.
2. The automated in-line system of clause 1, wherein the controller is further configured to control the flow rate of the resin through the automated resin delivery, deposition and infusion system using feedback based on measurement data of at least one of a resin width and a resin thickness for respective ones of the one or more infused fiber tows.
3. The automated in-line system of any preceding clause, further comprising one or more sensors for monitoring at least one of the resin width, the resin thickness, the resin temperature, the system temperature and the tension of the one or more infused fiber tows within the automated layup system.
4. The automated in-line system of any preceding clause, wherein the automated resin delivery, deposition and infusion system further comprises at least one infusion roller having a plurality of pores perforating an arcuate surface thereof, and configured to infuse the resin into the one or more fiber tows and form the one or more infused fiber tows
5. The automated in-line system of any preceding clause, wherein the automated resin delivery, deposition and infusion system further comprises at least one nozzle, wherein each of the at least one nozzle is configured to deposit the resin on at least one of the one or more fiber tows.
6. The automated in-line system of any preceding clause, further comprising a cooling module disposed in-line between the automated resin delivery, deposition and infusion system and the compaction roller.
7. The automated in-line system of any preceding clause, wherein the automated layup system further comprises a plurality of pinching rollers disposed in-line between the automated deposition and infusion system and the compaction roller.
8. The automated in-line system of any preceding clause, wherein the one or more infused fiber tows is configured as a resin infused fiber tape.
9. The automated in-line system of any preceding clause, where the one or more infused fiber tows is configured as a plurality of resin infused composite fibers.
10. A method for infusing a resin into one or more fiber tows to form one or more infused fiber tows and layup of the one or more infused fiber tows using the automated in-line manufacturing system of any preceding clause.
11. An automated in-line manufacturing system for applying a resin to one or more fiber tows, infusing the one or more fiber tows with the resin to form one or more infused fiber tows and subsequent layup of the one or more infused fiber tows to form a composite part, wherein each of the one or more fiber tows is moving at a respective fiber speed, the system comprising:
   an automated resin delivery, deposition and infusion system configured to deliver and deposit the resin on a respective one of the one or more fiber tows and infuse the resin into the one or more fiber tows to form the one or more infused fiber tows;
   an automated layup system configured in-line with the automated resin delivery, deposition and infusion system to receive the one or more infused fiber tows, the automated layup system comprising a plurality of pinching rollers in a feed path of the one or more infused fiber tows, at least one compaction roller configured to adhere the one or more infused fiber tows to a surface of a substrate and a positioning system to orient the compaction roller relative to the surface of the substrate; and
   a controller configured to control a flow rate of the resin relative to the fiber speed of the respective one of the one or more fiber tows through the automated resin delivery, deposition and infusion system using feedback based on measurement data of at least one of a resin width and a resin thickness for respective ones of the one or more infused fiber tows, control a temperature of the resin, the infused fiber tows and the automated layup system, and control tension of the one or more infused fiber tows within the automated layup system.
12. The automated in-line system of any preceding clause, further comprising one or more sensors for monitoring at least one of the resin width, the resin thickness, the resin temperature, the system temperature and the tension of the one or more infused fiber tows within the automated layup system.
13. The automated in-line system of any preceding clause, wherein the automated resin delivery, deposition and infusion system further comprises at least one infusion roller having a plurality of pores perforating an arcuate surface thereof, and an orifice for the admission of the resin into the interior of the roller, the at least one infusion roller further configured to infuse the resin into the one or more fiber tows and form the one or more infused fiber tows
14. The automated in-line system of any preceding clause, wherein the automated resin delivery, deposition and infusion system further comprises at least one infusion nozzle, wherein each of the at least one infusion nozzle is configured to deposit the resin on at least one of the one or more fiber tows.
15. The application and infusion system of any preceding clause, further comprising one or more computer controlled pumps, wherein each of the pumps is configured to supply the resin to an application and infusion portion of the automated resin delivery, deposition and infusion system, and wherein each of the pumps is controlled by the controller.
16. The application and infusion system of any preceding clause, wherein the controller is further configured to receive a plurality of fiber feed rate signals for the one or more fiber tows and to control the one or more computer controlled pumps based at least in part on the fiber feed rate signals for the respective ones of the one or more fiber tows.
17. The application and infusion system of any preceding clause, wherein two or more of the fiber tows have different ones of the fiber feed rates, such that the controller applies different control signals to the respective pumps.
18. The automated in-line system of any preceding clause, wherein the controller is further configured to receive a plurality of fiber feed rate signals for the one or more fiber tows and to control the automated resin delivery, deposition and infusion system and the automated layup system based at least in part on the fiber feed rate signals for the respective ones of the one or more fiber tows.
19. The automated in-line system of any preceding clause, wherein two or more of the one or more fiber tows have different ones of the fiber feed rates, such that the controller applies different control signals to the automated resin delivery, deposition and infusion system and the automated layup system.
20. A method for infusing a resin into one or more fiber tows to form one or more infused fiber tows and layup of the one or more infused fiber tows using the automated in-line manufacturing system of any preceding clause.

## Claims

1. An automated in-line manufacturing system (100, 200, 300, 400) for applying a resin (130, 230, 430) to one or more fiber tows (120, 220, 320, 420), infusing the one or more fiber tows with the resin to form one or more infused fiber tows (134, 234, 334, 434) and subsequent layup of the one or more infused fiber tows to form a composite part, wherein each of the one or more fiber tows is moving at a respective fiber speed, the automated system comprising:
an automated resin delivery, deposition and infusion system (110, 210, 310, 410) configured to deliver and deposit the resin (130,230, 430) on a respective one of the one or more fiber tows (120, 220, 320, 420) and infuse the resin (130, 230, 430) into the one or more fiber tows to form the one or more infused fiber tows (134, 234, 334, 434);
an automated layup system (112, 212, 312, 412) configured in-line with the automated resin delivery, deposition and infusion system (110, 210, 310, 410) to receive a feed-through of the one or more infused fiber tows (134, 234, 334, 434), the automated layup system (112, 212, 312, 412) comprising at least one compaction roller (136, 236, 436) configured to adhere the one or more infused fiber tows (134, 234, 334, 434) to a surface (140, 240, 440) of a substrate (138, 238, 438) and a positioning system (142, 242, 442), to orient the compaction roller (136, 236, 436) relative to the surface (140, 240, 440) of the substrate (138, 238, 438); and
a controller (132, 232, 432) configured to control a flow rate of the resin (130, 230, 430) relative to the fiber speed of the respective one of the one or more fiber tows (120, 220, 320, 420), control a temperature of the resin (130, 230, 430), the infused fiber tows (134, 234, 334, 434) and the automated layup system (112, 212, 412), and control tension of the one or more infused fiber tows (134, 234, 334, 434) within the automated layup system (112, 212, 412).

2. The automated in-line system of claim 1, wherein the controller (132, 232, 432) is further configured to control the flow rate of the resin (130, 230, 430) through the automated resin delivery, deposition and infusion system (110, 210, 310, 410) using feedback based on measurement data of at least one of a resin width and a resin thickness for respective ones of the one or more infused fiber tows (134, 234, 334, 434).

3. The automated in-line system of any preceding claim, further comprising one or more sensors (116) for monitoring at least one of the resin width, the resin thickness, the resin temperature, the system temperature and the tension of the one or more infused fiber tows (134) within the automated layup system (112).

4. The automated in-line system of any preceding claim, wherein the automated resin delivery, deposition and infusion system (210) further comprises at least one infusion roller (228) having a plurality of pores perforating an arcuate surface (227) thereof, and configured to infuse the resin (230) into the one or more fiber tows (220) and form the one or more infused fiber tows (234).

5. The automated in-line system of any preceding claim, wherein the automated resin delivery, deposition and infusion system (110, 410) further comprises at least one nozzle (128, 428), wherein each of the at least one nozzle is configured to deposit the resin (130, 430) on at least one of the one or more fiber tows (120, 420).

6. The automated in-line system of any preceding claim, further comprising a cooling module (444) disposed in-line between the automated resin delivery, deposition and infusion system (410) and the compaction roller (436).

7. The automated in-line system of any preceding claim, wherein the automated layup system (212, 412) further comprises a plurality of pinching rollers (237, 437) disposed in-line between the automated deposition and infusion system (210, 410) and the compaction roller (236, 436).

8. The automated in-line system of any preceding claim, wherein the one or more infused fiber tows (134, 234) is configured as a resin infused fiber tape (135, 235).

9. The automated in-line system of any preceding claim, where the one or more infused fiber tows (134, 234, 334, 434) is configured as a plurality of resin infused composite fibers.

10. A method for infusing a resin (130, 230, 330, 430) into one or more fiber tows (120, 220, 320, 420) to form one or more infused fiber tows (134, 234, 334, 434) and layup of the one or more infused fiber tows using the automated in-line manufacturing system (100, 200, 300, 400) of any preceding claim.
